# EUROPÄISCHE PATENTANMELDUNG

(11) **EP 1 241 698 A2**
(43) Veröffentlichungstag der Anmeldung: **18.09.2002**
(21) Anmeldenummer: 01123398.8
(22) Anmeldetag: 11.10.2001
(51) Int. Cl.: H01H 71/12, H01H 83/02

(54) **Vorrichtung zur Betätigung einer Auslösemechanik**

(30) Priorität: 15.03.2001 DE 10112563
(71) Anmelder: HEINRICH KOPP AG, D-63796 Kahl (DE)
(72) Erfinder: Fleckenstein, Hans-Jürgen, 63776 Mömbris (DE); Karg, Michael, 63796 Kahl (DE)
(74) Vertreter: Reinhard - Skuhra - Weise & Partner

(57) **Zusammenfassung**

Die Erfindung schafft eine Vorrichtung 1 zur Betätigung einer Auslösemechanik 2, insbesondere für einen Fehlerstrom-Schutzschalter, mit:
einem elektrischen Speicherelement 10, das mittels einer Spannung aufladbar ist; einem Verformungselement 11, durch dessen Verformung die Auslösemechanik 2 direkt betätigbar ist; und
mit einer Einrichtung 13 zum Anlegen der gespeicherten Spannung an das Verformungselement 11 für eine Verformung desselben.

## Beschreibung

Die vorliegende Erfindung betrifft eine Vorrichtung zur Betätigung einer Auslösemechanik, insbesondere für einen Fehlerstrom-Schutzschalter.

Obwohl auf beliebige Auslösemechaniken anwendbar, werden die vorliegende Erfindung sowie die ihr zugrundeliegende Problematik in bezug auf einen Fehlerstrom-Schutzschalter erläutert.

In dem Stand der Technik finden sich mehrere Arten von Fehlerstrom-Schutzschaltern.

Beispielsweise beschreibt das Dokument DE 197 27 152 A1 einen Fehlerstrom-Schutzschalter mit einem elektro-magnetischen Auslöser, der als Haltemagnetauslöser ausgebildet ist und einen Klappanker aufweist, der im nicht-ausgelösten Zustand gegen eine Polfläche des Joches durch einen Permanentmagneten angezogen ist. Dem Joch ist eine Spule zugeordnet, die bei einem Fehlerstrom den Magnetfluss innerhalb des Joches so beeinflusst, dass eine Klappankerfeder den Klappanker von der Polfläche abziehen kann. Der Klappanker überträgt seine Bewegung auf einen Stößel, welcher von unten auf einen Auslösemechanismus des Fehlerstrom-Schutzschalters drückt und eine Auslösung dieses Mechanismus und somit eine Unterbrechung des Stromflusses durch den Fehlerstrom-Schutzschalter bewirkt.
Als nachteilhaft bei diesem Ansatz hat sich die Tatsache herausgestellt, dass in einem konventionellen Magnetrelais eine Abhängigkeit von den durch die Ströme durch den Fehlerstrom-Schutzschalter erzeugten magnetischen Störfeldern besteht. Somit sind Abschirmmaßnahmen meistens unverzichtbar. Außerdem kann es bei längerem Nichtauslösen zum Verkleben des Klappankers kommen, wodurch eine sichere Auslösung nicht mehr oder nur zeitverzögert möglich ist.

Ferner ist aus der Druckschrift WO 96/01488 ein Mechanismus zur Verriegelung eines Auslösemechanismus bekannt, bei dem zwei bewegbare Bauteile derart miteinander verbindbar sind, dass das eine Bauteil mittels einer Federeinrichtung bezüglich einer vertikalen Relativbewegung vorgespannt ist. Für eine Sicherung dieser vorgespannten Stellung greift ein Stift in eine Öffnung des vorgespannten Bauteils ein. Dieser Stift ist mit einem piezo-elektrischen Stellelement verbunden. Durch Anlegen einer Spannung an dem piezo-elektrischen Stellelement wird dieses derart verformt, dass eine Kraft auf den Sperrstift wirkt und diesen aus der Öffnung des vorgespannten Bauteils herauszieht. Dadurch bewegt sich das Bauteil aufgrund seiner Vorspannung vertikal bezüglich dem anderen Bauteil und bewirkt die Auslösung eines Mechanismus zur Trennung der Kontakte des Fehlerstrom-Schutzschalters. Das piezo-elektrische Stellelement dient somit als Sperrklinke und ist nicht unmittelbar mit dem Auslösemechanismus verbunden.

Hierbei ist nachteilhaft, dass das piezoelektrische Stellelement aufgrund der direkten Verbindung mit dem Sperrstift bei der Auslösung durch auftretende Federkräfte mechanisch belastet wird, wodurch seine Lebensdauer bzw. seine Schalthäufigkeit erheblich reduziert wird.

In Anbetracht dessen liegt der Erfindung die Aufgabe zugrunde, eine Vorrichtung zur Betätigung einer Auslösemechanik zu schaffen, die die vorstehenden Nachteile beseitigt.

Diese Aufgabe wird gelöst durch den Gegenstand des Anspruchs 1.

Die der vorliegenden Erfindung zugrundeliegende Idee besteht darin, eine Vorrichtung zur Betätigung einer Auslösemechanik zu schaffen, welche aufweist:
eine elektrische Speichereinheit, vorzugsweise gebildet durch einen Kondensator, die mittels einer geeigneten Spannung aufladbar ist; ein Verformungselement, durch dessen Verformung die Auslösemechanik direkt betätigbar ist; und eine Einrichtung zum Anlegen der elektrischen Spannung der Speichereinheit an das Verformungselement für eine Verformung desselben.

Die vorliegende Erfindung weist gegenüber den bekannten Lösungsansätzen den Vorteil auf, dass auf ein Relais mit magnetischen Bauteilen, die durch Ströme beeinflusst werden können, verzichtet wird. Man schafft eine netzspannungsunabhängige Betätigungsvorrichtung, welche unmittelbar mit der Auslösemechanik verbunden ist. Somit wird die dynamische Auslenkung des Verformungselementes direkt für die Betätigung der Auslösemechanik verwendet. Weitere Bauteile, die eventuell eine zusätzliche mechanische oder elektro-magnetische Belastung darstellen, werden somit eingespart.

In den Unteransprüchen finden sich vorteilhafte Weiterbildungen und Verbesserungen der in Anspruch 1 angegebenen Betätigungsvorrichtung.

Gemäß einer bevorzugten Weiterbildung ist die Einrichtung als elektronischer und/oder magnetischer Schalter ausgebildet. Somit kann eine entsprechende Aufbringung der elektrischen Spannung der Speichereinheit auf das Verformungselement gewählt werden.

Gemäß einer weiteren bevorzugten Weiterbildung ist das Verformungselement als elektro-mechanisches Stellelement, insbesondere als piezo-elektrisches Stellelement, ausgebildet. Solche piezo-elektrischen Stellelemente weisen eine hohe Lebensdauer und eine große Anzahl an Schaltzyklen auf, wobei lediglich ein geringer Energieverbrauch auftritt.

Gemäß einer weiteren bevorzugten Weiterbildung weist das Verformungselement Anschlusskontakte auf, die für eine Rückstellung desselben kurzschließbar sind. Somit ist eine automatische Rückstellung des Verformungselementes ohne zusätzliche Spannungsimpulse oder Bauteile möglich.

Gemäß einer weiteren bevorzugten Weiterbildung ist eine zusätzliche Schalteinrichtung für das Kurzschließen der Anschlusskontakte vorgesehen. Diese Schalteinrichtung kann mit der Auslösemechanik derart rückgekoppelt werden, dass automatisch nach der Betätigung der Auslösemechanik die Anschlusskontakte des Verformungselementes durch Schließen der Schalteinrichtung kurzgeschlossen werden und das Verformungselement somit automatisch rückgestellt wird.

Gemäß einer weiteren bevorzugten Weiterbildung ist die Schalteinrichtung als elektronische und/oder mechanische Schalteinrichtung ausgebildet.

Gemäß einer weiteren bevorzugten Weiterbildung ist ein Widerstand in den Kurzschluss-Stromkreis schaltbar. Somit kann das Auftreten zu hoher Ströme, die eine Schädigung des Verformungselementes hervorrufen können, vermieden werden.

Gemäß einer weiteren bevorzugten Weiterbildung ist ein hochohmiger Widerstand permanent parallel zum Verformungselement geschaltet. Somit erfolgt automatisch die Rückstellung des Verformungselementes durch den entsprechend hochohmigen Widerstand. Die Rückstellung erfolgt dabei innerhalb eines sehr kurzen Zeitraums.

Gemäß einer weiteren bevorzugten Weiterbildung ist das Verformungselement getrennt von der Auslösemechanik ausgebildet. Das Verformungselement greift zwar direkt ohne zwischengeschalteten Bauteilen an der Auslösemechanik an, jedoch besteht keine mechanische Verbindung. Dies hat den Vorteil, dass die mechanische Beanspruchung des Verformungselements erheblich reduziert wird.

Ausführungsbeispiele der Erfindung sind in den Zeichnungen dargestellt und in der nachfolgenden Beschreibung näher erläutert.

Es zeigen:
- Fig. 1: ein Schaltbild einer Betätigungsvorrichtung gemäß einem ersten Ausführungsbeispiel der vorliegenden Erfindung;
- Fig. 2: ein Schaltbild einer Betätigungsvorrichtung gemäß einem zweiten Ausführungsbeispiel der vorliegenden Erfindung;
- Fig. 3: ein Schaltbild einer Betätigungsvorrichtung gemäß einem dritten Ausführungsbeispiel der vorliegenden Erfindung;
- Fig. 4: eine schematische Darstellung einer Betätigungsvorrichtung in einer ersten Stellung; und
- Fig. 5: eine schematische Darstellung einer Betätigungsvorrichtung in einer zweiten Stellung.

In den Figuren bezeichnen gleiche Bezugszeichen gleiche oder funktionsgleiche Komponenten.

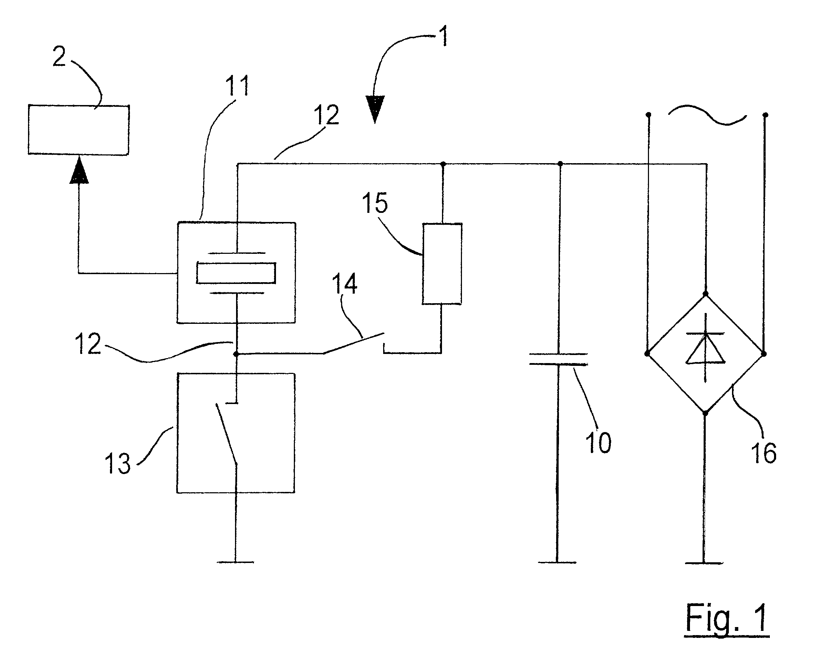

Fig. 1 illustriert das Schaltbild einer Vorrichtung 1 zur Betätigung einer Auslösemechanik 2 mittels eines Verformungselementes 11 gemäß einem ersten Ausführungsbeispiel der vorliegenden Erfindung.

Das Verformungselement 11 ist vorteilhaft als piezo-elektrisches Stellelement 11 ausgebildet, welches durch Anlegen einer Gleichspannung, beispielsweise einer Spannung von 325 Volt mittels eines Spannungsgleichrichters 16, eine translatorische Formänderung erfährt. Dabei verhält sich das piezoelektrische Stellelement 11 ähnlich einem Kondensator, der aufgeladen seine Verformung so lange beibehält, bis eine Entladung ermöglicht wird. Im Falle einer Entladung nimmt das piezo-elektrische Stellelement 11 seine ursprüngliche geometrische Form wieder an und kann durch ein erneutes Anlegen einer Gleichspannung wiederholt verformt werden.

Zur Energieversorgung des piezo-elektrischen Stellelements 11 wird gemäß dem ersten Ausführungsbeispiel die in Fig. 1 dargestellte Schaltung verwendet. Eine Speichereinheit 10, vorteilhaft ein µ-Kondensator, wird durch eine Gleichspannung auf einen vorbestimmten Wert aufgeladen. Im Falle einer anliegenden Wechselspannung kann diese mittels eines Gleichspannungsrichters 16, wie in Fig. 1 ersichtlich, in eine Gleichspannung umgewandelt werden.

Nach einem Aufladen des Kondensators 10 wird eine Spannungsversorgung an sich nicht weiter benötigt und die Schaltung kann demnach von der Spannungsquelle getrennt werden. Eine Einrichtung 13, insbesondere ein elektronischer, mechanischer oder elektromechanischer Schalter 13, kann die am Kondensator 10 anliegende Spannung auf das piezoelektrische Stellelement 11 schalten. Dadurch wird eine Formänderung des piezo-elektrischen Stellelements 11 bewirkt und direkt die Auslösemechanik 2 für eine Unterbrechung, beispielsweise eines Stromfehlers, betätigt.

Eine Rückstellung des piezo-elektrischen Stellelements 11 erfolgt durch ein Kurzschließen der beiden Anschlusskontakte 12 des piezo-elektrischen Stellelements 11 mittels einer Schalteinrichtung 14. Zusätzlich kann, wie in Fig. 1 ersichtlich, ein Widerstand in den Kurzschluss-Stromkreis für eine Verhinderung zu hoher Ströme geschaltet sein. Denn ein Auftreten zu hoher Ströme kann zu einer Schädigung des piezo-elektrischen Stellelements 11 führen. Dabei kann die Schalteinrichtung 14 ein externer elektrischer, mechanischer oder elektromechanischer Schalter 14 sein.

Durch den zur Einrichtung 13 hin gerichteten Pfeil in Fig. 1 soll das Signal dargestellt werden, welches die Notwendigkeit eines Schließens der Einrichtung 13 aufgrund eines eintretenden Ereignisses, beispielsweise eines Stromfehlers, signalisiert.

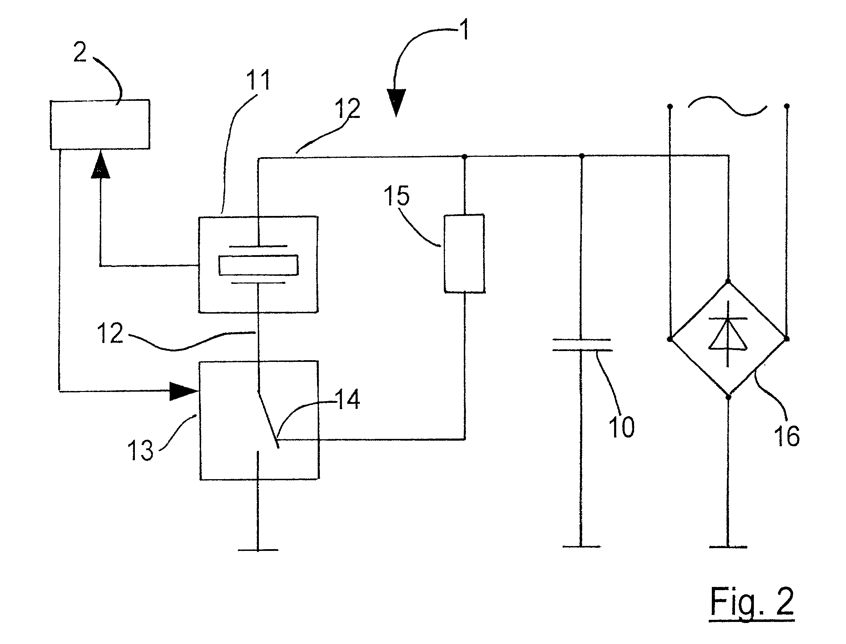

Fig. 2 zeigt das Schaltbild der Vorrichtung 1 gemäß einem zweiten Ausführungsbeispiel der vorliegenden Erfindung.

Im Unterschied zum ersten Ausführungsbeispiel erfolgt eine Rückstellung des piezo-elektrischen Stellelements 11 durch ein Kurzschließen der Anschlusskontakte mittels einer Schalteinrichtung 13, 14. Die Schalteinrichtung 13, 14 ist derart mit der Auslösemechanik 2 rückkoppelbar, dass beispielsweise unmittelbar bei der Rückstellung der Auslösemechanik ein Signal an die Schalteinrichtung 13, 14 geliefert wird, welches das Öffnen des Schalters 13 bzw. das Schließen des Schalters 14 und somit ein Kurzschließen des piezo-elektrischen Stellelements 11 bzw. eine Rückstellung des Stellelements 11 bewirkt.

Die Schalleinrichtung 13, 14 kann auch als kombiniertes Schaltelement (Öffner - Schließer) ausgeführt sein, so daß nach der Betätigung des Schaltelements 13, 14 die automatische Rückstellung des Schaltelements 13, 14 erfolgt und damit das Kurzschließen des piezo-elektrischen Schaltelements 11 bewirkt.

Die übrigen Komponenten sind baugleich zum ersten Ausführungsbeispiel ausgebildet und weisen identische Funktionen auf. Da diese unter Bezugnahme auf Fig. 1 bereits ausführlich erläutert wurden, erübrigt sich eine nähere Beschreibung dieser Komponenten für das zweite Ausführungsbeispiel.

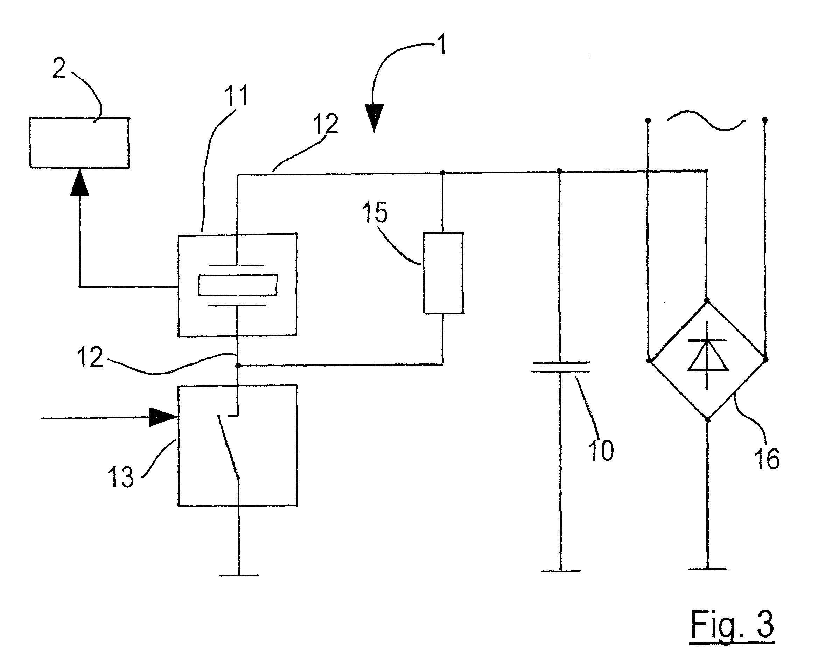

In Fig. 3 ist ein Schaltbild einer Vorrichtung 1 gemäß einem dritten Ausführungsbeispiel der vorliegenden Erfindung dargestellt, wobei im Gegensatz zum ersten Ausführungsbeispiel gemäß Fig. 1 eine Rückstellung des piezo-elektrischen Stellelements 11 mittels einem permanent parallel geschalteten, hochohmigen Widerstands 15 erfolgt. Dieser zieht zwar beim Aufladen des piezo-elektrischen Stellelements 11 einen Teil des Stromes auf sich und reduziert dadurch die Schalthäufigkeit bei abgetrennter Stromversorgung, jedoch besitzt er den Vorteil, dass die Rückstellung des piezo-elektrischen Elements innerhalb weniger Sekunden automatisch erfolgt. Des weiteren kann die Schalteinrichtung 13 einfacher gestaltet werden.

Mit dem ersten Ausführungsbeispiel bau- und funktionsgleiche Komponenten bedürfen unter Verweis auf die Beschreibung der Fig. 1 keiner weiteren Erläuterung.

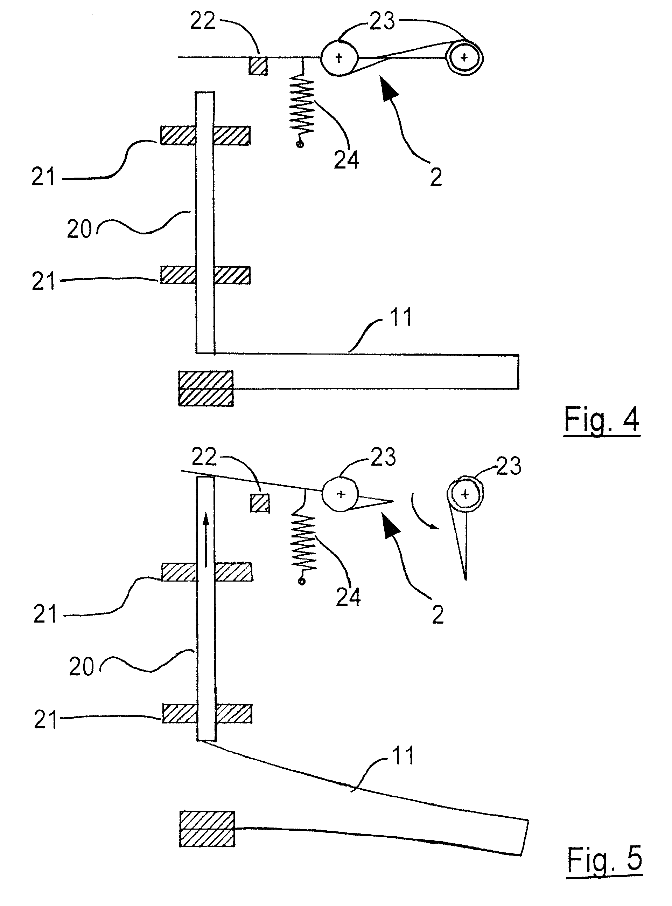

Die Fig. 4 und 5 illustrieren eine schematische Darstellung einer Vorrichtung 1 zur Betätigung einer Auslösemechanik 2 gemäß einem Ausführungsbeispiel der vorliegenden Erfindung in einer ersten bzw. einer zweiten Stellung.

In der ersten Stellung, wie in Fig. 4 ersichtlich, hält eine Federeinrichtung 24 eine Kontakttrenneinrichtung 23 in einer Ruhestellung, wobei ein Anschlag 22 die jeweilige Position festlegt. Die Kontakttrenneinrichtung 23 unterbricht beispielsweise im Falle einer Betätigung aufgrund eines fehlerhaften Stromes einen elektrischen Kontakt. Ein piezo-elektrisches Stellelement 11, vorteilhaft als Biegestreifen ausgebildet, ist getrennt von der Auslösemechanik 2 in Nähe dieser angebracht. Gemäß diesem Ausführungsbeispiel wird aus konstruktiven Gründen die Auslösemechanik 2 über eine mit dem piezo-elektrischen Stellelement 11 verbundene Stange 20 direkt betätigt. Allerdings ist eine direkte Betätigung der Auslösemechanik 2 ebenfalls unmittelbar durch das piezo-elektrische Stellelement ohne Verwendung der Stange 20 möglich.

Durch Anlegen einer kurzzeitigen Spannung am piezo-elektrischen Stellelement 11 durch die elektrische Speichereinheit 10 bzw. den Kondensator 10, siehe eine der Figuren 1 bis 3, verformt sich das piezo-elektrische Stellelement 11 derart, dass die Stange 20 direkt auf die Kontakttrenneinrichtung 23 einwirkt, wie in Fig. 5 dargestellt.

Somit wird durch die vorliegende Erfindung eine netzspannungsunabhängige Betätigungsvorrichtung geschaffen, die für das Betätigen selbst keine Spannungsversorgung benötigt, da die im elektrischen Speicherelement 10 gespeicherte Energie ausreicht, das piezoelektrische Stellelement 11 bei zwischenzeitlicher Rückstellung mehrfach anzusteuern. Zudem wird auf die magnetischen Bauteile eines herkömmlichen Relais verzichtet und somit eine Beeinflussung der Vorrichtung durch Spannungsschwankungen bzw. Ströme oder elektromagnetische Felder verhindert.

Ebenfalls ist durch einen Spannungsimpuls eine präzise Auslösung der Auslösemechanik möglich. Ferner besitzen handelsübliche piezo-elektrische Stellelemente 11 eine höhere Lebensdauer als herkömmliche Relais. Die Schalthäufigkeit für piezoelektrische Stellelemente kann größer als 10⁸ betragen. Außerdem besitzen piezo-elektrische Stellelemente einen äußerst geringen Energieverbrauch.

Obwohl die vorliegende Erfindung anhand bevorzugter Ausführungsbeispiele vorstehend beschrieben wurde, ist sie darauf nicht beschränkt, sondern auf vielfältige Weise modifizierbar.

## Patentansprüche

1. Vorrichtung (1) zur Betätigung einer Auslösemechanik (2), insbesondere für einen Fehlerstrom-Schutzschalter, mit:
einer elektrischen Speichereinheit 10, die mittels einer Spannung aufladbar ist;
einem Verformungselement (11), durch dessen Verformung die Auslösemechanik (2) direkt betätigbar ist; und mit
einer Einrichtung (13) zum Anlegen der Spannung an das Verformungselement (11) für eine Verformung desselben.

2. Vorrichtung nach Anspruch 1, **dadurch gekennzeichnet, dass** die Einrichtung (13) als elektronischer und/oder mechanischer und/oder elektromechanischer Schalter (13) ausgebildet ist.

3. Vorrichtung nach einem der Ansprüche 1 oder 2, **dadurch gekennzeichnet, dass** das Verformungselement (11) als elektro-mechanisches Stellelement, insbesondere als piezo-elektrisches Stellelement (11), ausgebildet ist.

4. Vorrichtung nach einem der vorhergehenden Ansprüche, **dadurch gekennzeichnet, dass** das Verformungselement (11) Anschlusskontakte (12) aufweist, die für eine Rückstellung des selben kurzschließbar sind.

5. Vorrichtung nach Anspruch 4, **dadurch gekennzeichnet, dass** eine zusätzliche Schalteinrichtung (14) für das Kurzschließen der Anschlusskontakte (12) vorgesehen ist.

6. Vorrichtung nach Anspruch 4, **dadurch gekennzeichnet, dass** die Schalteinrichtung (13, 14) für das Kurzschließen der Anschlusskontakte (12) mit der Auslösemechanik (2) rückkoppelbar ist.

7. Vorrichtung nach einem der Ansprüche 5 oder 6, **dadurch gekennzeichnet, dass** die Schalteinrichtung (14) als elektronische und/oder mechanische Schalteinrichtung (14) ausgebildet ist.

8. Vorrichtung nach einem der Ansprüche 4 bis 7, **dadurch gekennzeichnet, dass** ein Widerstandselement (15) in den Kurzschluss-Stromkreis zur Vermeidung zu hoher Ströme schaltbar ist.

9. Vorrichtung nach einem der Ansprüche 1 bis 4, **dadurch gekennzeichnet, dass** ein hochohmiges Widerstandselement (15) permanent parallel zum Verformungselement (11) geschaltet ist.

10. Vorrichtung nach einem der vorhergehenden Ansprüche, **dadurch gekennzeichnet, dass** das Verformungselement (11) getrennt von der Auslösemechanik (2) ausgebildet ist.
